# DEMANDE DE BREVET EUROPEEN

(11) **EP 0 707 877 A1**
(43) Date de publication de la demande: **24.04.1996**
(21) Numéro de dépôt: 95402064.0
(22) Date de dépôt: 12.09.1995
(51) Int. Cl.: B01D 21/00, B01D 21/04, B01D 21/24

(54) **Décanteur longitudinal à séparation de flux**

(30) Priorité: 04.10.1994 FR 9411854
(71) Demandeur: DEGREMONT, F-92508 Rueil-Malmaison Cédex (FR)
(72) Inventeur: Smati, Abdellatif, F-92150 Suresnes (FR)
(74) Mandataire: Armengaud Ainé, Alain

(57) **Abrégé**

Décanteur longitudinal continu à séparation de flux caractérisé en ce qu'il comprend :
- une zone (1) d'entrée du liquide à traiter comprenant un système de répartition de ce liquide ;
- une zone (2) d'homogénéisation de l'écoulement assurant une dissipation de l'énergie d'entrée et un profil de vitesse régulier et sensiblement plat à la sortie de cette zone ;
- une zone utile de décantation (3) présentant un écoulement homogène tout le long de laquelle est maintenu un profil de vitesse régulier et sensiblement plat ainsi qu'un nombre de Froude élevé garantissant la stabilité de l'écoulement du liquide et ;
- une zone de séparation et de reprise des flux (4), située à l'extrémité aval du décanteur, le liquide traité étant évacué en surface et les matières décantées par le fond du décanteur.

## Description

La présente invention concerne d'une manière générale un dispositif permettant de séparer en continu les matières non miscibles contenues dans un liquide, sous forme d'émulsion ou de suspension, et elle vise plus particulièrement un décanteur longitudinal à séparation de flux, pouvant être mis en oeuvre par exemple dans une installation de traitement d'eau (notamment décantation, clarification, déshuilage).

On sait qu'un décanteur continu doit être réalisé de manière que :
- l'écoulement soit homogène, le moins turbulent possible et le plus stable possible, de manière à obtenir des filets fluides horizontaux et parfaitement parallèles sur toute la longueur de l'ouvrage ou tout au moins sur sa majeure partie ;
- la zone d'entrée soit la plus réduite possible et qu'elle permette d'obtenir une répartition la plus parfaite possible du liquide brut à traiter et un écoulement homogène ;
- la reprise du liquide clarifié et celle des matières décantées soient les plus uniformes possible de manière à n'engendrer aucune perturbation significative sur l'écoulement homogène.

Lorsqu'on réalise un décanteur longitudinal à flux horizontal, on se heurte à la difficulté d'assurer une bonne répartition hydraulique sur un plan vertical tant à l'entrée de l'ouvrage qu'à sa sortie et aux problèmes que posent l'accumulation, la collecte et l'évacuation des matières décantées,notamment des boues.

Afin de résoudre les problèmes mentionnés ci-dessus, on s'efforce d'obtenir autant que possible une circulation la moins turbulente possible dans tout le décanteur, laquelle est caractérisée par des valeurs les plus faibles possible du nombre de Reynolds. Par ailleurs, on sait également que le nombre de Froude permet d'apprécier la stabilité d'un écoulement : plus la circulation est stable, plus la distribution des vitesses est uniforme sur toute la section du bassin de décantation : des circulations stables se caractérisant par des nombres de Froude élevés.

On pourra à cet égard se reporter au "Mémento Technique de l'Eau", 9ème Edition 1989, publiée par la présente titulaire, pages 158 à 166.

Les considérations ci-dessus démontrent l'importance de l'hydraulique interne d'un décanteur, qui est le résultat global de la géométrie du décanteur, des dispositifs d'entrée et de sortie de liquides et de reprise des matières décantées, notamment des boues et de la disposition relative de ces trois dispositifs.

Il est connu que pour réaliser une décantation optimale, il faut une zone d'écoulement tranquille et non perturbée, cette zone étant définie comme étant la zone utile de décantation dans laquelle le profil de vitesse d'écoulement est régulier. Un décanteur est d'autant plus performant que la dimension de cette zone utile est importante par rapport aux dimensions totales de l'ouvrage.

Or, dans la plupart des décanteurs actuellement réalisés, la zone utile de décantation est très réduite en raison des perturbations induites notamment, d'une part, par le système d'entrée du liquide qui ne remplit pas sa fonction de dissipation d'énergie et de répartition et, d'autre part, par le dispositif de reprise du liquide traité qui génère des courants d'appel dont l'effet perturbateur se fait ressentir dans la majeure partie de l'ouvrage.

L'invention se propose d'apporter un décanteur horizontal perfectionné remarquable notamment par une excellente hydraulique interne permettant d'obtenir un très bon rendement.

En conséquence, cette invention concerne un décanteur longitudinal continu à séparation de flux caractérisé en ce qu'il comprend :
- une zone d'entrée du liquide à traiter comprenant un système de répartition de ce liquide ;
- une zone d'homogénéisation de l'écoulement assurant une dissipation de l'énergie d'entrée et un profil de vitesse régulier et sensiblement plat à la sortie de cette zone ;
- une zone utile de décantation présentant un écoulement homogène tout le long de laquelle est maintenu un profil de vitesse régulier et sensiblement plat ainsi qu'un nombre de Froude élevé garantissant la stabilité de l'écoulement du liquide et ;
- une zone de séparation et de reprise des flux, située à l'extrémité aval du décanteur, le liquide traité étant évacué en surface et les matières décantées par le fond du décanteur.

Selon la présente invention, la zone d'entrée et de répartition du liquide à traiter peut être réalisée conformément aux caractéristiques définies dans la demande de brevet français 93 14 815 déposée le 9 décembre 1993 par la présente titulaire et intitulée : "Perfectionnements apportés aux décanteurs". Selon ce mode de réalisation préféré, cette zone d'entrée comporte donc un système de répartition de liquide qui est constitué par une pluralité d'ouvertures calibrées, pratiquées dans les cloisons de la chambre d'admission du liquide, ces ouvertures étant alimentées en liquide à partir d'un canal d'alimentation de manière que chaque ouverture reçoive une fraction déterminée du débit du liquide, lesdites ouvertures étant disposées en quinconce selon au moins deux rangées horizontales. On pourra se reporter à cette demande de brevet notamment en ce qui concerne les effets techniques et avantages apportés par cette solution préférée.

Selon la présente invention, la zone de séparation et de reprise des flux comprend :
- à sa partie supérieure un système de goulottes de reprise du liquide traité, ces goulottes étant disposées de préférence sur toute la largeur de l'ouvrage et,
- à sa partie inférieure, soit un système de trémies dans lesquelles se déposent les matières décantées, celles-ci étant reprises à partir des trémies par tout moyen classique, soit un système de raclage et de reprise des matières décantées.

Selon un autre mode de réalisation de la présente invention la zone de séparation et de reprise des flux comprend :
- en partie supérieure des moyens de reprise du liquide traité pouvant être réalisés sous la forme de goulottes ou d'un réseau immergé de tuyaux perforés situés à proximité de la surface du décanteur ;
- en partie inférieure des moyens de reprise des matières décantées réalisées de préférence sous la forme d'un réseau immergé de tuyaux perforés positionnés au fond du décanteur.

Selon un mode de réalisation préféré, la zone de séparation et de reprise des flux est munie d'un système de capteurs de l'interface liquide traité-matières décantées, permettant d'obtenir une régulation de la reprise des matières décantées.

Selon l'invention, et dans le cas de son application au traitement des suspensions, la récupération des flottants s'effectue à l'aide de goulottes transversales pouvant être disposées soit en amont de l'ouvrage, dans la zone d'entrée du liquide, soit en aval, à l'entrée de la zone de séparation et de reprise des flux, soit simultanément en ces deux emplacements.

Selon l'invention, le décanteur est du type à couloirs séparés, éventuellement à parois communicantes, chaque couloir comportant les quatre zones définies ci-dessus, le nombre de couloirs étant choisi de manière à obtenir le nombre de Reynolds désiré.

Selon un mode de réalisation préféré, on prévoit dans la deuxième et troisième zone un dispositif de reprise des matières décantées, pouvant être réalisé de façon classique sous la forme d'un pont racleur mobile qui peut être muni de tubes suceurs permettant de réaliser une reprise des matières décantées dans ces deux zones.

Selon un autre mode de réalisation de la présente invention, le décanteur comporte en outre dans la zone de séparation et de reprise des flux, un système lamellaire afin de réaliser un affinage de la décantation.

D'autres caractéristiques et avantages de la présente invention ressortiront de la description faite ci-après en référence aux dessins annexés qui en illustrent un exemple de réalisation dépourvu de tout caractère limitatif. Sur les dessins :
- la figure 1 est un schéma de principe représentant un décanteur selon l'invention, en coupe axiale longitudinale, dans son application au traitement des suspensions.
- la figure 2 est une vue en coupe axiale longitudinale d'un exemple de réalisation d'un décanteur selon l'invention ;
- la figure 3 est une vue en plan du décanteur selon la figure 1,
- la figure 4 est une vue en coupe selon 4.4 de la figure 3, à échelle agrandie,
- la figure 5 est une vue en coupe selon 5.5 de la figure 3, à échelle agrandie,
- la figure 6 est un schéma de principe similaire à la figure 1, concernant l'application de l'invention au traitement des émulsions et,
- la figure 7 est un schéma de principe similaire à la figure 6, avec, dans la partie inférieure de la zone de séparation, un système de raclage et de reprise des matières décantées.

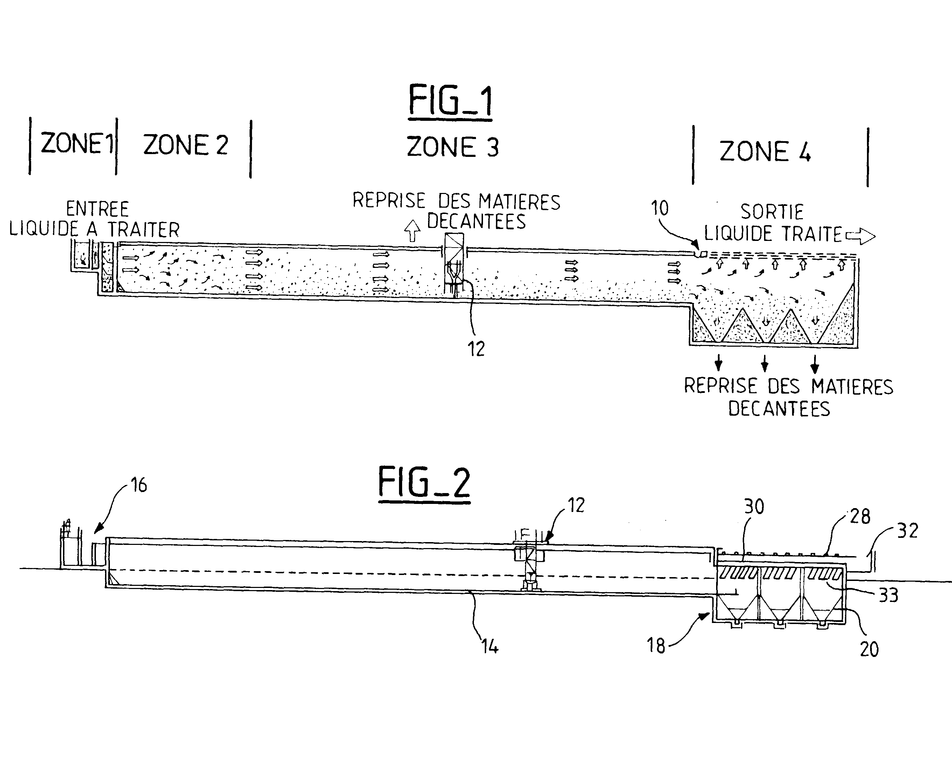

On se réfère en premier lieu au schéma de la figure 1, relatif à l'application de l'invention au traitement de suspensions, sur lequel on a distingué les autre zones d'un décanteur selon l'invention :

La zone 1 est celle par laquelle s'effectue l'entrée du liquide à traiter, par exemple une eau brute contenant des matières en suspension,notamment une eau résiduaire, industrielle ou urbaine. Cette zone 1 comporte un système de répartition du liquide à traiter, et dans cet exemple de réalisation préféré, ce système comprenant une pluralité d'ouvertures disposées et conçues de manière à obtenir une dispersion pratiquement uniforme des jets de liquide dans toutes les directions, tout en occupant la quasi totalité de la section présentée à l'écoulement. Ainsi qu'on l'a précisé ci-dessus, ce système de répartition est de préférence, réalisé conformément aux dispositions prévues dans le brevet français 93 14 815, mentionné ci-dessus et auquel le lecteur pourra se reporter. Ce système ne sera donc pas décrit à nouveau.

La zone 2 faisant suite à la zone 1 d'entrée et de répartition du liquide constitue une zone d'homogénéisation de l'écoulement. Sa longueur est déterminée de manière à obtenir une dissipation naturelle de l'énergie d'entrée et un profil de vitesse plat à sa sortie.

La zone 3 est la zone utile de la décantation et elle présente un écoulement homogène et non perturbé du liquide sur toute sa longueur, cet écoulement tranquille permettant de maintenir un profil de vitesse régulier. Ainsi qu'on le voit sur cette figure 1, la dimension de cette zone 3 est importante par rapport à la dimension générale du décanteur, ce qui permet d'obtenir un rendement optimal de ce dernier.

La zone 4 constitue la zone de sortie des matières décantées et du liquide traité dans laquelle on doit éviter toute distorsion des vitesses par rapport à la zone précédente. Dans cette zone 4, on réalise donc la séparation et la reprise des flux : liquide traité/matières décantées, le liquide traité étant repris en surface et les matières décantées par le fond du décanteur. Dans l'exemple de réalisation illustré par la figure 1 qui s'applique au traitement des suspensions, les matières décantées sont recueillies dans un système de trémies qui sera décrit en détail ci-après.

Dans l'exemple de réalisation non limitatif représenté sur cette figure 1, cette zone 4 comporte à son entrée et sur toute sa largeur, une goulotte transversale de reprise des flottants, désignée par la référence 10. Cette reprise des flottants peut également être réalisée à la sortie de la zone 1. On peut évidemment envisager des moyens de reprise des flottants à la sortie de cette zone 1 et à l'entrée de la zone 4. Cette récupération des flottants effectuée au début de la zone 4 et obtenue à l'aide d'une goulotte transversale disposée sur toute la largeur du décanteur permet de protéger la sortie du liquide traité. On réalise ainsi un siphoïde naturel sur la largeur de l'ouvrage, ce qui contribue à faciliter sa construction.

Sur cette figure 1, on a en outre représenté en 12, un dispositif de reprise des matières décantées. Ce dispositif peut être réalisé de façon classique sous la forme d'un pont racleur éventuellement muni de tubes de succion ainsi qu'on le décrira ci-après.

On se réfère maintenant aux figures 2 à 5 qui représentent en détail un exemple non limitatif de réalisation du dispositif de l'invention conformément au schéma de la figure 1.

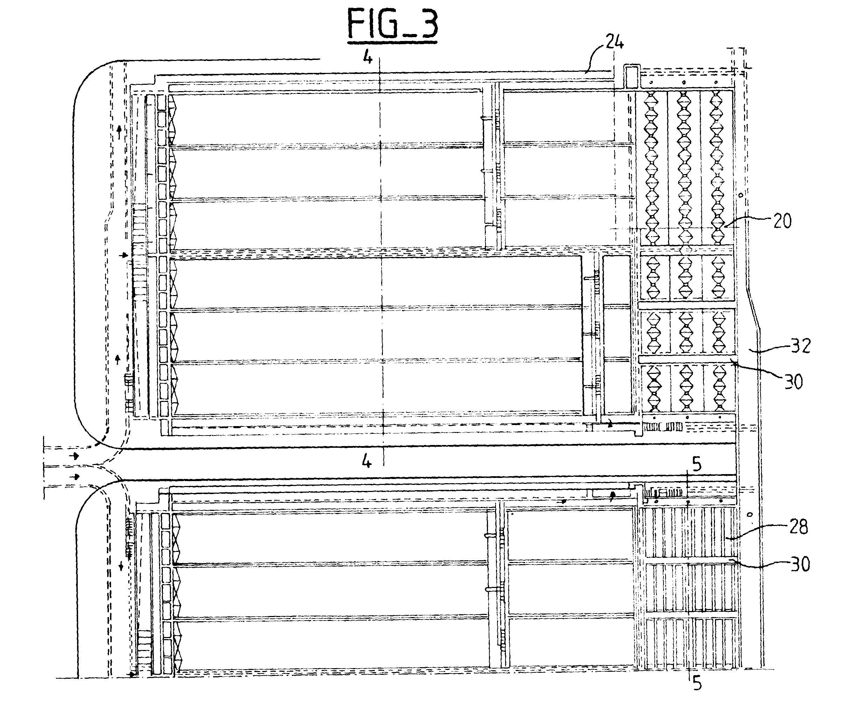

Sur ces figures 2 à 5, on voit que le décanteur selon la présente invention se présente sous la forme classique d'un bassin désigné dans son ensemble par la référence 14, partagé en couloirs à l'aide de parois de séparation, éventuellement communicantes, comme on le voit clairement sur la figure 3. Ce bassin de décantation 14 comporte à son entrée dans la zone correspondant à la zone 1 de la figure 1, un dispositif d'admission et de répartition du liquide à traiter, désigné dans son ensemble par la référence 16 qui peut être par exemple, du type mentionné ci-dessus et qui, en conséquence, ne sera pas décrit, le lecteur pouvant se reporter au brevet français sus-mentionné n° 93 14 815.

A la suite du dispositif d'entrée et de répartition 16, chaque couloir du bassin de décantation comporte les zones 2 et 3 conformément à la figure 1. On ne reprendra donc pas à nouveau la description de ces deux zones.

La zone 4 de ce décanteur comporte ainsi qu'on l'a vu ci-dessus, des moyens de séparation et de reprise simultanées des matières décantées et du liquide traité. Ces moyens sont désignés dans leur ensemble par la référence 18 (figure 2).

Dans cet exemple d'application au traitement de suspensions, les matières décantées sont recueillies dans un système de trémies telles que 20, chaque trémie 20 pouvant être munie à sa base d'un orifice d'évacuation débouchant sur une canalisation collectrice 22, à partir de laquelle les matières décantées sont refoulées dans des goulottes collectrices telles que 24 disposées à la périphérie de l'ouvrage (voir la figure 3), la reprise des matièresdécantées étant réalisée par l'intermédiaire de vannes par exemple du type télescopique 26.

Cette reprise des matières décantées peut être effectuée par tout moyen approprié : par exemple à l'aide de tubes suceurs gravitaires débouchant sur des goulottes disposées à la surface du décanteur et dans lesquelles le niveau du liquide est inférieur à celui dans le décanteur ou bien par tout moyen d'exhaure connu, par exemple par l'intermédiaire de tubes pourvus de pompes à émulsion débouchant sur des goulottes disposées à la surface du décanteur et dans lesquelles le niveau du liquide peut être supérieur à celui dans le décanteur.

Cette même zone 4 comporte le système de goulottes qui, selon l'invention, assure la reprise et l'évacuation du liquide traité. Afin de maintenir un écoulement non perturbé dans cette zone 4, on réalise une reprise du liquide traité sur toute la surface de cette zone, contrairement aux dispositions classiques dans lesquelles la reprise de l'eau traitée s'effectue par l'intermédiaire de goulottes latérales, ce qui génère des courants d'appel dont les effets se font ressentir loin en amont de cette zone d'évacuation du liquide traité, perturbant ainsi l'écoulement dans le décanteur. Ainsi, dans cet exemple de réalisation, la reprise du liquide traité dans la zone 4, s'effectue par l'intermédiaire d'un réseau de goulottes transversales telles que 28, débouchant sur des goulottes longitudinales telles que 30, le liquide traité, étant ensuite évacué par l'intermédiaire d'un canal collecteur 32.

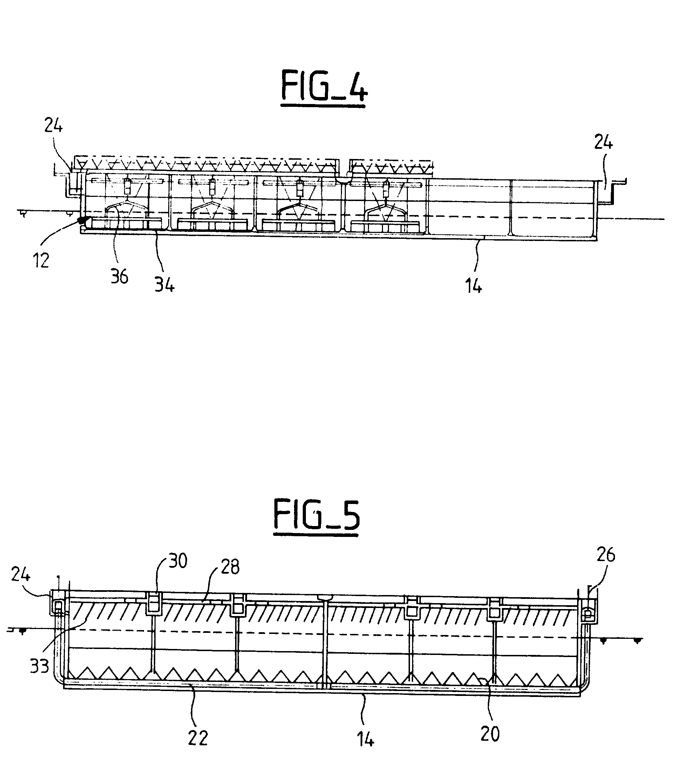

Comme on l'a représenté sur les figures 2 et 5, le dispositif selon la présente invention peut comporter en outre un système de décantation lamellaire 33, placé dans la zone 4, afin d'améliorer encore la décantation.

Selon une variante de l'invention, ledit système de goulottes de reprise du liquide traité peut comprendre un réseau de goulottes longitudinales débouchant sur une ou plusieurs goulottes transversales, le liquide traité étant évacué à partir de ce système de goulottes par l'intermédiaire du canal collecteur 32.

On a vu ci-dessus que, selon l'invention, on pouvait prévoir un système de reprise des matières décantées telles que 12, disposé dans les zones 2 et 3 du bassin de décantation. Ce système peut être d'un type classique "pont racleur mobile" comportant des lames racleuses telles que 34 et, chaque lame racleuse peut être munie d'un tube suceur tel que 36. Cette variante de l'invention permet de réaliser un décanteur raclé à succion des matières décantées pouvant être utilisé notamment dans une installation de clarification des liquides, et notamment des eaux résiduaires, par boues activées. Il ne s'agit là cependant que d'un exemple d'application et d'un mode de mise en oeuvre non limitatifs.

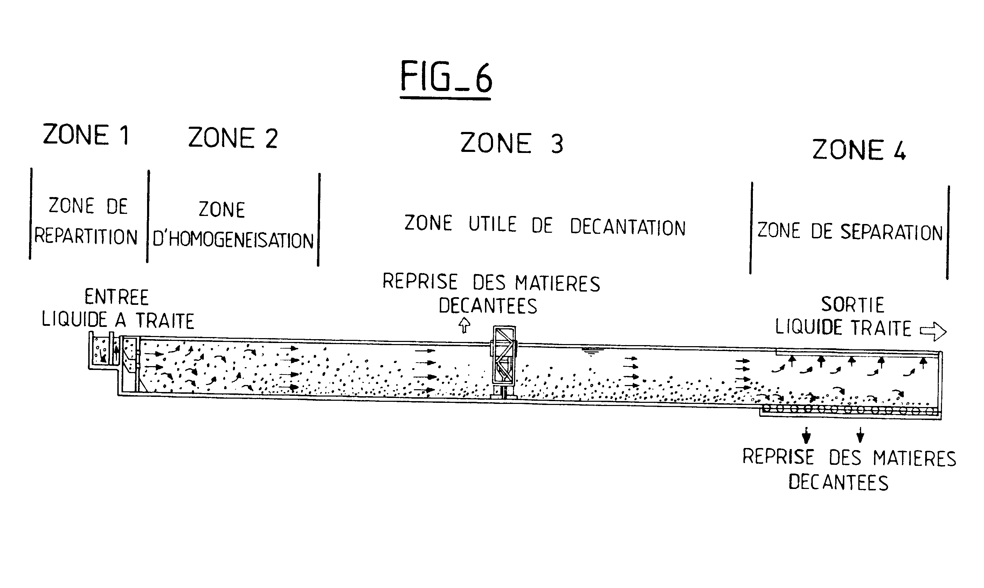

La figure 6 illustre l'application d'un décanteur selon l'invention au traitement d'émulsions. On retrouve sur cette figure 6, les quatre zones dont les caractéristiques ont été définies dans la description qui précède, seule la zone 4 de séparation des flux étant réalisée de façon différente. Dans cette application, la reprise du liquide traité s'effectue en partie supérieure de cette zone, par exemple par l'intermédiaire soit de goulottes comme spécifié ci-dessus, soit d'un réseau immergé de tuyaux perforés situés à proximité de la surface du décanteur et la reprise des matières décantées s'effectue à l'aide d'un réseau immergé de tuyaux perforés positionnés au fond du décanteur.

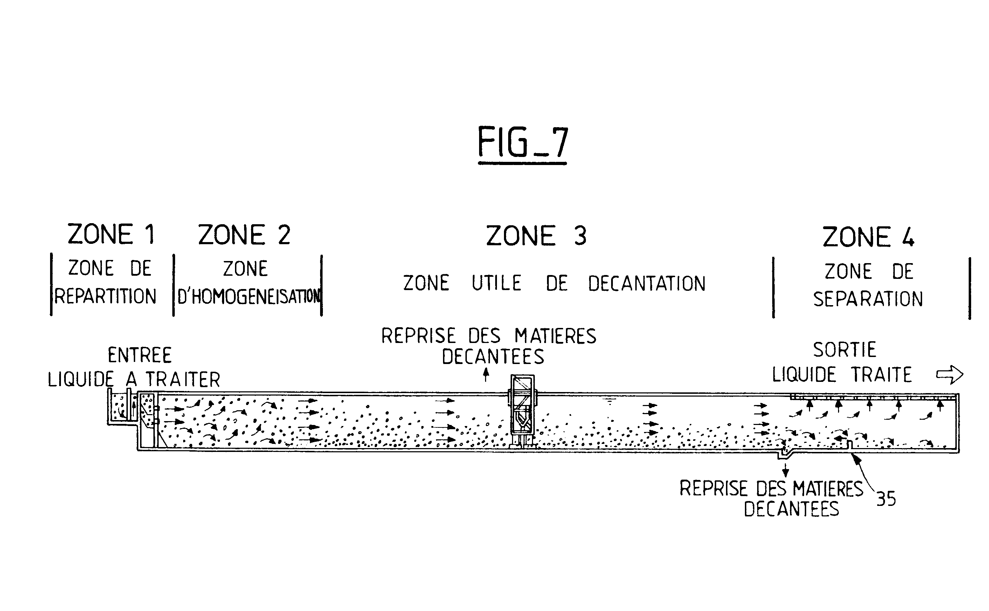

Dans la variante de l'invention, illustrée par la figure 7, la reprise des matières décantées, dans la zone 4, s'effectue à l'aide d'un système de raclage 35.

Ainsi qu'on l'a précisé ci-dessus, le décanteur selon l'invention, permet de maintenir une vitesse pratiquement constante sur toute la longueur de son bassin, ce qui permet d'obtenir une excellente stabilité de l'écoulement. Ce résultat est dû aux caractéristiques combinées de la zone 1 d'entrée et de répartition du liquide à traiter, des zones 2 et 3 qui présentent une longueur suffisante pour obtenir et maintenir la stabilité de l'écoulement du liquide et de la zone 4 de séparation et de reprise des flux dont le fonctionnement n'a aucun effet nuisible sur la stabilité de l'écoulement en amont, du liquide à traiter.

Selon une variante de l'invention, on peut également prévoir dans la zone 4, un décanteur lamellaire qui permet d'améliorer la séparation des matières en suspension dans le liquide traité et de reprendre des matières non homogènes, ce qui permet de réaliser un affinage de la décantation.

On peut également selon l'invention prévoir des moyens permettant de réguler la reprise des matières décantées en fonction du débit du liquide traité. En effet, le décanteur selon la présente invention se caractérise par une surface très franche de séparation des flux à l'entrée de la zone 4, ce qui permet à l'aide de capteurs, de détecter la position en hauteur de cette surface de séparation liquide traité/matières décantées et de réaliser un système d'asservissement de la reprise des matières décantées à la partie inférieure de la quatrième zone, par exemple en fonction du débit.

Parmi les avantages apportés par le dispositif selon l'invention, on peut citer notamment :
- un excellent rendement de la décantation résultant de la stabilité de l'écoulement du liquide sur toute la longueur de l'ouvrage, due aux facteurs mentionnés ci-dessus,
- une simplification de la construction découlant notamment du fait que contrairement aux solutions antérieures, la reprise du liquide traité ne s'effectue pas par un système de goulottes latérales mais sur toute la largeur de l'ouvrage, ce qui facilite la réalisation des surfaces de roulement d'un pont racleur.
- possibilité de choisir le nombre de couloirs du bassin de décantation de manière à conserver le nombre de Reynolds désiré, sans réduction du nombre de Froude.

Le décanteur selon l'invention peut être appliqué à la séparation de toutes matières non miscibles contenues dans un liquide, sous forme d'émulsion ou de suspension, par exemple à la décantation, à la clarification, au déshuilage, etc. Elle sera bien entendu mise en oeuvre de façon préférée dans une installation de traitement d'eaux pour séparer les matières en suspension contenues dans des eaux résiduaires industrielles ou urbaines. Le décanteur peut également être mis en oeuvre, ainsi qu'on l'a mentionné ci-dessus, dans une installation de clarification des eaux résiduaires avec recirculation des boues.

Il demeure bien entendu que la présente invention n'est pas limitée aux exemples de réalisation et de mise en oeuvre décrits et/ou mentionnés ici, mais qu'elle en englobe toutes les variantes.

## Revendications

1. Décanteur longitudinal continu à séparation de flux caractérisé en ce qu'il comprend :
- une zone (1) d'entrée du liquide à traiter comprenant un système de répartition de ce liquide ;
- une zone (2) d'homogénéisation de l'écoulement assurant une dissipation de l'énergie d'entrée et un profil de vitesse régulier et sensiblement plat à la sortie de cette zone ;
- une zone utile de décantation (3) présentant un écoulement homogène tout le long de laquelle est maintenu un profil de vitesse régulier et sensiblement plat ainsi qu'un nombre de Froude élevé garantissant la stabilité de l'écoulement du liquide et ;
- une zone de séparation et de reprise des flux (4), située à l'extrémité aval du décanteur, le liquide traité étant évacué en surface et les matières décantées par le fond du décanteur.

2. Décanteur selon la revendication 1 caractérisé en ce que ladite zone d'entrée et de répartition (1) comporte un système de répartition de liquide (16) qui est constitué par une pluralité d'ouvertures calibrées, pratiquées dans les cloisons de la chambre d'admission du liquide, ces ouvertures étant alimentées en liquide à partir d'un canal d'alimentation de manière que chaque ouverture reçoive une fraction déterminée du débit du liquide, lesdites ouvertures étant disposées en quinconce selon au moins deux rangées horizontales.

3. Décanteur selon l'une des revendications 1 ou 2 caractérisé en ce que la zone de séparation et de reprise des flux (4) comprend :
- à sa partie supérieure un système de goulottes (28, 30) de reprise du liquide traité, ces goulottes étant disposées de préférence sur toute la largeur de l'ouvrage et,
- à sa partie inférieure, un système de trémies (20) dans lesquels se déposent les matières décantées, celles-ci étant reprises à partir des trémies par tout moyen classique.

4. Décanteur selon l'une des revendications 1 ou 2 caractérisé en ce que la zone de séparation et de reprise des flux (4) comprend :
- à sa partie supérieure un système de goulottes (28, 30) de reprise du liquide traité, ces goulottes étant disposées de préférence sur toute la largeur de l'ouvrage et,
- à sa partie inférieure, un système de raclage et de reprise des matières décantées (35).

5. Décanteur selon l'une des revendications 3 ou 4 caractérisé en ce que ledit système de goulottes de reprise du liquide traité comprend un réseau de goulottes transversales (28) débouchant sur une ou plusieurs goulottes longitudinales (30) le liquide traité étant évacué à partir de ce système de goulottes par l'intermédiaire d'un canal collecteur (32).

6. Décanteur selon l'une des revendications 3 ou 4 caractérisé en ce que ledit système de goulottes de reprise du liquide traité comprend un réseau de goulottes longitudinales débouchant sur une ou plusieurs goulottes transversales, le liquide traité étant évacué à partir de ce système de goulottes par l'intermédiaire d'un canal collecteur (32).

7. Décanteur selon l'une quelconque des revendications précédentes caractérisé en ce que la reprise des matières décantées dans la zone (4) de séparation et de reprise des flux s'effectue par l'intermédiaire de tubes suceurs gravitaires débouchant sur des goulottes disposées à la surface du décanteur et dans lesquelles le niveau du liquide est inférieur à celui dans le décanteur.

8. Décanteur selon l'une quelconque des revendications précédentes caractérisé en ce que la reprise des matières décantées dans la zone (4) de séparation et de reprise des flux s'effectue par l'intermédiaire de moyens d'exhaure, notamment de tubes pourvus de pompes à émulsion, débouchant sur des goulottes disposées à la surface du décanteur et dans lesquelles le niveau du liquide peut être supérieur à celui dans le décanteur.

9. Décanteur selon l'une quelconque des revendications 1 à 6 caractérisé en ce que la reprise des matières décantées dans la zone (4) de séparation et de reprise des flux s'effectue à l'aide d'un réseau immergé de tuyaux perforés, positionnés au fond du décanteur.

10. Décanteur selon l'une quelconque des revendications 1, 2, 7 à 9 caractérisé en ce que la reprise du liquide traité dans la zone de séparation et de reprise des flux (4) s'effectue par l'intermédiaire d'un réseau immergé de tuyaux perforés situés à proximité de la surface du décanteur.

11. Décanteur selon l'une quelconque des revendications précédentes caractérisé en ce que la récupération des flottants est effectuée à l'aide d'une goulotte transversale (10) pouvant être disposée soit en amont de l'ouvrage, dans la zone d'entrée (1) du liquide à traiter, soit en aval à l'entrée de la zone de séparation et de reprise des flux (4) soit en ces deux emplacements.

12. Décanteur selon l'une quelconque des revendications précédentes caractérisé en ce que le décanteur est du type à couloirs séparés, éventuellement à parois communicantes, chacun des couloirs comportant les quatre zones susmentionnées et le nombre de couloirs étant choisi de manière à obtenir le nombre de Reynolds désiré.

13. Décanteur selon l'une quelconque des revendications précédentes caractérisé en ce que on prévoit dans la deuxième (2) et dans la troisième zone (3) un dispositif de reprise des matières décantées (12).

14. Décanteur selon la revendication 9 caractérisé en ce que ce dispositif de reprise des matières décantées est réalisé sous la forme d'un pont racleur mobile, éventuellement muni de tubes suceurs.

15. Décanteur selon l'une quelconque des revendications précédentes caractérisé en ce qu'il comporte en outre, dans la zone (4) un système lamellaire (33) afin de réaliser un affinage de la décantation.

16. Décanteur selon l'une quelconque des revendications précédentes caractérisé en ce que la zone (4) de séparation et de reprise des flux est munie d'un système de capteurs de la position de l'interface liquide traité-matières décantées permettant d'obtenir une régulation de la reprise des matières décantées.
